# EUROPÄISCHE PATENTSCHRIFT

(11) **EP 3 707 031 B1**
(45) Veröffentlichungstag und Bekanntmachung des Hinweises auf die Patenterteilung: **25.08.2021**
(21) Anmeldenummer: 18746936.6
(22) Anmeldetag: 27.07.2018
(51) Int. Cl.: B60R 21/00, A63G 7/00

(54) **BÜGEL-SEKUNDÄR-SICHERUNG**
SECONDARY BAR SECURING DEVICE
FIXATION SECONDAIRE D'UN ARCEAU

(30) Priorität: 10.11.2017 DE 102017126488
(43) Veröffentlichungstag der Anmeldung: 16.09.2020
(73) Patentinhaber: Mack Rides GmbH & Co. KG, 79183 Waldkirch (DE)
(72) Erfinder: KRAUS, Michael, 79238 Ehrenkirchen (DE); BURGER, Guenter, 79183 Waldkirch (DE)
(74) Vertreter: Westphal, Mussgnug & Partner Patentanwälte mbB
(86) Internationale Anmeldenummer: PCT/EP2018/070445
(87) Internationale Veröffentlichungsnummer: WO 2019/091610

(56) Entgegenhaltungen:
- EP-A1- 0 911 224
- EP-A1- 1 059 207
- US-A1- 2010 307 288

## Beschreibung

Die vorliegende Erfindung betrifft eine Bügel-Sekundär-Sicherung einer Primärsicherung, eine Sitzanordnung mit einer erfindungsgemäßen Sekundär-Sicherung sowie ein Fahrgeschäft nach den Patentansprüchen 1, 15, und 19.

Sicherheitsbügel für Fahrgeschäfte sind aus dem Stand der Technik in unterschiedlichen Ausgestaltungen bekannt. Derartige Fahrgeschäfte sind beispielsweise Achterbahnen, bei denen die Fahrgäste starken Beschleunigungen ausgesetzt sind. Während der Fahrt mit einem Fahrgeschäft wird der Fahrgast durch einen Sicherheitsbügel auf seinem Sitz gehalten, wobei der Sicherheitsbügel über ein Verriegelungssystem arretiert ist. Gemäß Norm DIN EN 13814 wird je nach Beschleunigung die auf den Fahrgast wirkt, ein entsprechendes Verriegelungssystem vorgeschrieben.

Zum Ein- und Aussteigen aus dem Fahrzeug wird der Sicherheitsbügel bzw. das Verriegelungssystem geöffnet und der Sicherheitsbügel durch eine Bügelstelleinheit um eine Drehachse verschwenkt. Dagegen ist der Sicherheitsbügel während der Fahrt mittels einer mechanischen Sperre oder der Bügelstelleinheit, die oftmals auch das primäre Verriegelungssystem bildet, derart verriegelt, dass dieser auch bei einem Ausfall der Bügelstelleinheiten in der geschlossenen Position verbleibt.

Nachteilig an dem Stand der Technik ist, dass die bekannten mechanischen Sperren oder die primären Verriegelungssysteme aufgrund der stetigen Benutzung und Belastung starkem Verschleiß unterliegen und dadurch wartungsaufwendig sind. Auch sind mechanische Sperren mit zusätzlichem Gewicht verbunden, wodurch aufgrund höherer Fahrzeuggewichte ein größerer Energieaufwand zur Beschleunigung erforderlich ist. Die EP0911224 A1 offenbart eine Bügel-Sekundär-Sicherung eines Sicherheitsbügels eines Fahrgeschäfts umfassend eine Primärsicherung, die den Sicherheitsbügel während einer Fahrt des Fahrgeschäfts in einer an die Anatomie des Fahrgastes angepassten Winkelstellung hält, mindestens ein erstes Sperrelement und mindestens ein zweites Sperrelement, wobei das mindestens eine erste Sperrelement und das mindestens eine zweite Sperrelement in einem Abstand zueinander angeordnet sind.

Die vorliegende Erfindung hat die Aufgabe, eine Bügel-Sekundär-Sicherung bereitzustellen, welche erst dann den Sicherheitsbügel sperrt, wenn die Primärsicherung ausfällt. Die erfindungsgemäße Bügel-Sekundär-Sicherung soll bei einer intakten Primärsicherung außer Kraft gesetzt werden, so dass diese last- und verschleißfrei ist und der Wartungsaufwand somit erheblich reduziert ist. Darüber hinaus soll die erfindungsgemäße Bügel-Sekundär-Sicherung besonders zuverlässig und kostengünstig in der Herstellung sein, sowie ein geringes Gewicht aufweisen. Auch soll die erfindungsgemäße Bügel-Sekundär-Sicherung mit relativ schlanken Bauteilen bei einem Ausfall der Primärsicherung hohe Haltekräfte sicher übertragen und diese Kraftübertragung bereits mit sehr wenig Kraftaufwand bewerkstelligen.

Eine weitere Aufgabe, die die vorliegende Erfindung lösen soll, ist eine Bügel-Sekundär-Sicherung bereitzustellen, die eine stufenlose Absicherung des Schließwinkels des Sicherheitsbügels ermöglicht. Somit soll der Schließwinkel des Sicherheitsbügels unabhängig von der Anatomie des Fahrgastes gesichert werden können.

Diese Aufgaben werden durch die erfindungsgemäße Bügel-Sekundär-Sicherung mit den Merkmalen des Anspruchs 1, der Sitzanordnung nach Anspruch 15 sowie mit dem Fahrgeschäft nach Anspruch 19 gelöst. Vorteilhafte Weiterbildungen sind Gegenstand anhängiger Ansprüche.

Die erfindungsgemäße Bügel-Sekundär-Sicherung eines Sicherheitsbügels eines Fahrgeschäfts umfasst eine Primärsicherung, die den Sicherheitsbügel während einer Fahrt des Fahrgeschäfts in einer an die Anatomie des Fahrgastes angepassten Winkelstellung hält und mindestens ein erstes Sperrelement und mindestens ein zweites Sperrelement, wobei das mindestens eine erste Sperrelement und das mindestens eine zweite Sperrelement in einem Abstand zueinander angeordnet sind. Beim Versagen der Primärsicherung ist der Sicherheitsbügel in einem tolerierten Öffnungswinkel bewegbar, wodurch erreicht ist, dass die Sperrelemente im Regelbetrieb stets lastfrei und somit verschleißfrei sind. Der tolerierte Öffnungswinkel steht dabei in einem vorgegebenen Verhältnis zu dem Abstand zwischen dem mindestens einen ersten und dem mindestens einen zweiten Sperrelement. Beim Überschreiten des tolerierten Öffnungswinkels des Sicherheitsbügels blockieren das mindestens eine erste Sperrelement und das mindestens eine zweite Sperrelement den Sicherheitsbügel, so dass der Fahrgast weiterhin sicher gehalten ist. Demnach ist die Bügel-Sekundär-Sicherung stets lastfrei. Daraus ergibt sich eine besonders leichte Bauweise, da keine zyklische Belastung vorliegt, sondern lediglich eine quasi statische Belastung.

Weiterhin umfasst die erfindungsgemäße Bügel-Sekundär-Sicherung für den verschwenkbaren Sicherheitsbügel eines Fahrgeschäfts wenigstens eine erste Drehachse, die mit der Schwenkbewegung des Sicherheitsbügels gekoppelt ist und wenigstens eine zweite Drehachse, die mit der wenigsten einen ersten Drehachse gekoppelt ist. Die wenigstens eine erste Drehachse kann dabei die Drehachse des Sicherheitsbügels sein, oder eine weitere Drehachse, die mit der Sicherheitsbügel-Drehachse mechanisch direkt oder indirekt gekoppelt ist. Darüber hinaus ist an der wenigstens einen ersten Drehachse mindestens ein erstes Sperrelement und an der wenigstens zweiten Drehachse mindestens ein zweites Sperrelement angebracht. In dem Kraftfluss zwischen dem mindestens einen ersten Sperrelement und dem mindestens einen zweiten Sperrelement ist weiterhin die wenigstens eine Stelleinrichtung vorgesehen, durch die der Kraftfluss zwischen dem mindestens einen ersten Sperrelement und dem mindestens einen zweiten Sperrelement unterbrochen bzw. hergestellt werden kann. In dem aktivierten Zustand der Stelleinrichtung folgen das mindestens eine erste Sperrelement und das mindestens eine zweite Sperrelement der Drehung der wenigstens einen ersten und der wenigstens einen zweiten Drehachse und verkeilen miteinander, wodurch eine weitere Verdrehung der Drehachsen unterbunden ist und somit der Sicherheitsbügel arretiert ist.

Gemäß einer vorteilhaften Ausgestaltung der vorliegenden Erfindung ist die wenigstens eine Stelleinrichtung zwischen einer der Drehachsen und einem der Sperrelemente angeordnet. Besonders bevorzugt ist dabei, wenn die Stelleinrichtung zwischen der wenigstens einen zweiten Drehachse und dem wenigstens einen zweiten Sperrelement vorgesehen ist.

Die Stelleinrichtung kann weiterhin als eine elektromagnetische Federdruckbremse oder als ein elektromagnetischer Aktor ausgebildet sein, wobei im spannungsfreien Zustand der Stelleinrichtung die Stelleinrichtung aktiviert ist und bei einer Bestromung die Stelleinrichtung deaktiviert ist. Somit kann die bestromte elektromagnetische Federdruckbremse den Kraftfluss zwischen dem ersten Sperrelement und dem zweiten Sperrelement unterbrechen. Dabei ist es vorteilhaft, wenn die Stelleinrichtung an einem ersten Ende der zweiten Drehachse angeordnet ist, wodurch sich ein kompakter Aufbau ergibt. Weiterhin alternativ kann die Stelleinrichtung eine Permanentmagnetbremse oder ein anders ausgestalteter Aktor oder eine andere Kupplungsvariante sein, die elektrisch und/oder mechanisch betätigbar ist.

Gemäß einer weiteren vorteilhaften Ausgestaltung der vorliegenden Erfindung ist die wenigstens eine erste Drehachse mit der wenigstens einen zweiten Drehachse mittels mindestens eines Gestänges gekoppelt. Das mindestens eine Gestänge kann aus jeweils einem Hebel an der jeweiligen Drehachse gebildet werden, wobei die Hebel mit einer Verbindungsstange verbunden sind. Dabei ist es insbesondere vorteilhaft, wenn das Gestänge an einem zweiten Ende der ersten Drehachse und an einem zweiten Ende der zweiten Drehachse angeordnet ist.

Weiterhin ist es vorteilhaft, wenn die wenigstens eine erste Drehachse mit der wenigstens einen zweiten Drehachse mittels eines Getriebes gekoppelt ist. Dabei ist es weiter bevorzugt, wenn das Getriebe an einem zweiten Ende der ersten Drehachse und an einem zweiten Ende der zweiten Drehachse angeordnet ist. Das Getriebe kann als Zahnradgetriebe, Riemengetriebe, Kettengetriebe oder dergleichen ausgebildet sein. Besonders bevorzugt ist dabei, wenn das Übersetzungsverhältnis in etwa 1:1 beträgt.

Es hat sich weiterhin als besonders vorteilhaft erwiesen, wenn die wenigstens eine erste Drehachse und die wenigstens eine zweite Drehachse parallel und beabstandet zueinander angeordnet sind. Dadurch ist ein besonders einfacher und unkomplizierter und platzsparender Aufbau der Bügel-Sekundär-Sicherung gewährleistet.

Darüber hinaus ist es vorteilhaft, wenn die wenigstens eine erste Drehachse und die wenigstens eine zweite Drehachse gegenläufig gekoppelt sind. Die gegenläufige Kopplung der wenigstens einen ersten Drehachse und der wenigstens einen zweiten Drehachse hat den Vorteil, dass die Sperrelemente derart verkeilen, dass im verkeilten Zustand der Sperrelemente keine Drehmomente über die Drehachsen und die Stelleinrichtung übertragen werden müssen.

Gemäß einer weiteren vorteilhaften Ausgestaltung ist mindestens eines der Sperrelemente ganz oder bereichsweise exzentrisch zu der jeweiligen Drehachse ausgebildet. Durch die exzentrische Anordnung können im geschlossenen Zustand der Stelleinrichtung die jeweiligen Sperrelemente zunächst um einen vorgegebenen Winkel frei drehen. Erst beim Überschreiten des vorgegebenen Winkels verkeilen sodann die Sperrelemente. Dieser Winkel ist je nach Fahrgeschäft und Risikobeurteilung festzulegen und entspricht einem Sicherheitsbügel-Öffnungswinkel, der bei einem Versagen des primären Verriegelungssystems toleriert wird, bevor die Bügel-Sekundär-Sicherung verriegelt.

Wenigstens eines der Sperrelemente kann weiterhin vorteilhaft mindestens einen exzentrischen Anschlag aufweisen. Der Anschlag verhindert im verkeilten Zustand der Sperrelemente eine weitere Drehung, wodurch ein späteres Lösen der Sperrwirkung weniger kraftaufwendig ist.

Die Sperrelemente können darüber hinaus zueinander mindestens eine korrespondierende Verzahnung aufweisen, die beim Verkeilen ineinander greift. Besonders bevorzugt ist dabei, wenn eines der Sperrelemente abschnittsweise als eine Außenverzahnung eines Stirnrades ausgebildet ist, die koaxial zu der jeweiligen Drehachse angeordnet ist, und das andere Sperrelement als korrespondierende exzentrisch angeordnete Innenverzahnung. Insbesondere bei einer gegenläufigen Kopplung der wenigstens einen ersten Drehachse und der wenigstens einen zweiten Drehachse ziehen sich die Verzahnungen gegenseitig in die verkeilte Stellung.

Gemäß einer weiteren vorteilhaften Ausgestaltung der vorliegenden Erfindung ist wenigstens ein Rücksteller vorgesehen, durch den wenigstens eines der Sperrelemente mittels einer Federkraft in einer Grundstellung gehalten ist. Besonders bevorzugt ist der Rücksteller an dem wenigstens einen zweiten Sperrelement angeordnet, wodurch dieses im entkoppelten Zustand der Stelleinrichtung in der Grundstellung gehalten ist. Die Federkraft bringt auf das jeweilige Sperrelement ein Drehmoment auf. Das Drehmoment muss kleiner als das durch die Stelleinrichtung übertragbare Drehmoment sein.

Darüber hinaus ist es besonders vorteilhaft, wenn in der Grundstellung der Sperrelemente ein Abstand zwischen dem wenigstens einen ersten Sperrelement und dem wenigstens einen zweiten Sperrelement angeordnet ist, wodurch im fehlerfreien Betrieb des Sicherheitsbügels die Bügel-Sekundär-Sicherung stets last- und verschleißfrei gehalten ist. Der Abstand wird besonders bevorzugt mittels eines Gewindebolzens des Rückstellers eingestellt, wobei durch die Winkelstellung des Gewindebolzens ein Spaltmaß bzw. der Abstand eingestellt werden kann. Der Abstand zwischen dem wenigstens einen ersten Sperrelement und dem wenigstens einen zweiten Sperrelement ist je nach Fahrgeschäft und Risikobeurteilung festzulegen und definiert den zulässigen Öffnungswinkel des Sicherheitsbügels bei einem Ausfall der Primärsicherung. Der zulässige Öffnungswinkel ist direkt abhängig von dem Abstand zwischen dem ersten Sperrelement und dem zweiten Sperrelement.

Die Bügel-Sekundär-Sicherung kann darüber hinaus eine Nothandfunktion aufweisen, durch die ein Verkeilen der Sperrelemente verhindert ist. Die Nothandfunktion ist für die Evakuierung des Fahrgeschäfts bzw. des Fahrzeugs des Fahrgeschäfts notwendig, wenn die Stelleinrichtung nicht betätigt werden kann. Eine solche Situation liegt beispielsweise vor, wenn ein Fahrzeug des Fahrgeschäftes liegenbleibt, und kein Strom zur Betätigung der elektromagnetischen Federdruckbremse verfügbar ist. Die Nothandfunktion ist vorzugsweise durch einen betätigbaren Rastbolzen gebildet, der bei einer Betätigung in eine Kulisse greift, wodurch eine Drehung des jeweiligen Sperrelementes verhindert ist. Das Sperrmoment des Rastbolzens muss dabei größer bemessen sein als das Kupplungsmoment der Stelleinrichtung bzw. Reibmoment der elektromagnetischen Federdruckbremse.

Ferner betrifft die vorliegende Erfindung eine Sitzanordnung eines Fahrgeschäfts, bestehend aus mindestens einem Sitz, mindestens einem verschwenkbaren Sicherheitsbügel zur Sicherung mindestens eines Fahrgastes auf dem mindestens einen Sitz, mindestens einer Bügel-Sekundär-Sicherung und mindestens einer Bügelstelleinheit, wobei die Bügelstelleinheit den Sicherheitsbügel verschwenkt. Während der Fahrt des Fahrzeuges ist die Stelleinrichtung im aktivierten Zustand. Bei einem Ausfall der Bügelstelleinheit bzw. der Primärsicherung und einer geringfügigen Öffnungsbewegung des Sicherheitsbügels verkeilen die beiden Sperrelemente, wodurch der Sicherheitsbügel bei einem Ausfall der Primärsicherung bzw. der mindestens einen Bügelstelleinheit arretiert ist. Eine solche Arretierung durch die Bügel-Sekundär-Sicherung erfolgt somit ausschließlich dann, wenn die Bügelstelleinheit bzw. das primäre Verriegelungssystem versagt.

Darüber hinaus ist besonders vorteilhaft, wenn die Bügelstelleinheit ein Druckzylinder oder ein mechanischer Verriegelungszylinder ist. Insbesondere Druckzylinder sind besonders zuverlässig und können ausreichend große Kräfte aufbringen, um den Sicherheitsbügel zügig zuzustellen und sicher zu arretieren. Die Bügelstelleinheit wirkt während der Fahrt als das primäre Verriegelungssystem und arretiert den Sicherheitsbügel in der geschlossenen Position.

Gemäß einer weiteren vorteilhaften Ausgestaltung der vorliegenden Erfindung ist zur Übertragung der Zustellbewegung zwischen der Bügelstelleinheit und dem Sicherheitsbügel mindestens eine Umlenkwippe vorgesehen. Die Umlenkwippe ist einerseits mit der Bügelstelleinheit und andererseits mit dem Sicherheitsbügel gekoppelt und wandelt eine Zustellung der Bügelstelleinheit oder eine Schwenkbewegung des Sicherheitsbügels in eine Drehung der ersten Drehachse um.

Darüber hinaus hat es sich als besonders vorteilhaft erwiesen, wenn die wenigstens eine erste Drehachse die Drehachse des Sicherheitsbügels ist. Die Bügel-Sekundär-Sicherung ist demnach direkt an der Lagerung des Sicherheitsbügels positioniert, wodurch sich ein besonders kompakter und sicherer Aufbau ergibt, der einerseits mit einer geringeren Anzahl von kritischen Bauteilen auskommt und andererseits ergeben sich Gewichtsvorteile.

Ein weiterer Aspekt der vorliegenden Erfindung betrifft ein Fahrgeschäft mit wenigstens einer Bahn und wenigstens einem auf der Bahn beweglichen Fahrzeug mit mindestens einer Sitzanordnung mit wenigstens einer Bügel-Sekundär-Sicherung.

Gemäß einer besonders vorteilhaften Ausgestaltung der vorliegenden Erfindung ist dabei vorgesehen, dass das Fahrgeschäft eine Bahnhof-Station aufweist, und dass in der Bahnhof-Station mindestens eine elektrische Verbindung zwischen der Bahnhof-Station und dem Fahrzeug hergestellt ist, durch welche die Stelleinrichtung der wenigstens einen Sitzanordnung betätigt ist. In der Bahnhof-Station ist beim Ein- und Aussteigen der Fahrgäste durch eine Betätigung der Stelleinrichtung die Bügel-Sekundär-Sicherung ausgeschaltet und eine Schwenkbewegung des Sicherheitsbügels ist freigegeben.

Nachfolgend werden zwei bevorzugte Ausführungsbeispiele der Erfindung unter Bezugnahme auf die begleitenden Zeichnungen im Detail beschrieben. Die Zeichnungen zeigen:
- Figur 1: eine erfindungsgemäße Sitzanordnung mit einem Sitz und mit einem verschwenkbaren Sicherheitsbügel, der den Fahrgast auf dem Sitz sichert, der mittels einer erfindungsgemäßen Bügel-Sekundär-Sicherung zur Erhöhung der Fahrgast-Sicherheit gesichert ist,
- Figur 2: eine vergrößerte perspektivische Darstellung der Bügel-Sekundär-Sicherung gemäß Figur 1 bestehend aus einer ersten Drehachse mit einem ersten Sperrelement, die mit dem verschwenkbaren Sicherheitsbügel gekoppelt ist und einer zweiten Drehachse mit einem zweiten Sperrelement,
- Figur 3: eine perspektivische und geschnittene Darstellung der Bügel-Sekundär-Sicherung gemäß Figur 2,
- Figur 4: eine schematische Seitenansicht der erfindungsgemäßen Bügel-Sekundär-Sicherung bei einem ordnungsgemäß geschlossenen Sicherheitsbügel bzw. in der Grundstellung,
- Figur 5: eine schematische Seitenansicht der erfindungsgemäßen Bügel-Sekundär-Sicherung gemäß Figur 4 in der Sperrstellung der Bügel-Sekundär-Sicherung, und
- Figur 6: eine schematische Darstellung eines zweiten erfindungsgemäßen Ausführungsbeispiels der Bügel-SekundärSicherung.

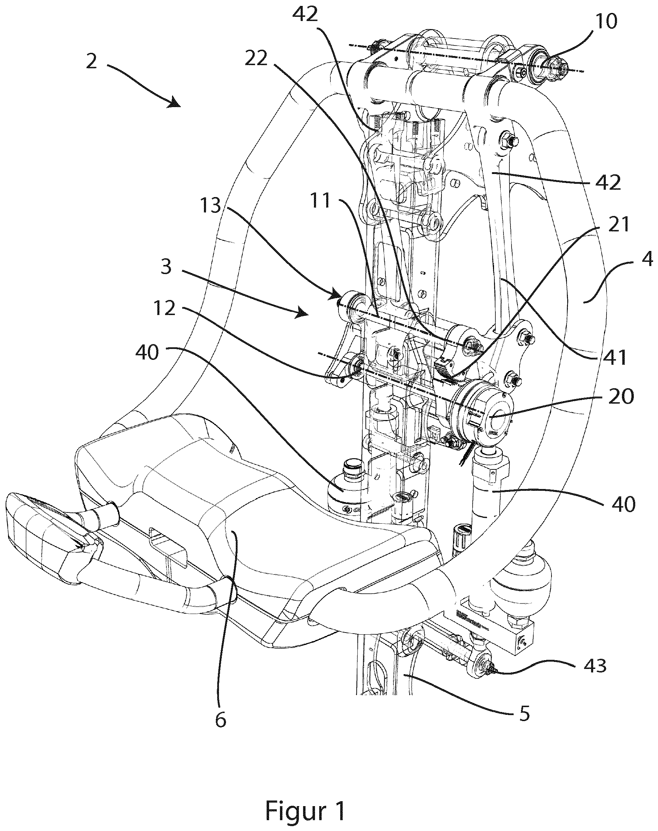

Nachfolgend wird unter Bezugnahme auf die Figuren 1 bis 5 eine Sitzanordnung 2 mit einer Bügel-Sekundär-Sicherung 3 eines Fahrgeschäfts 1 (nicht dargestellt) gemäß eines bevorzugten Ausführungsbeispiels der Erfindung im Detail beschrieben.

Figur 1 ist die Sitzanordnung 2 mit der erfindungsgemäßen Bügel-Sekundär-Sicherung 3 zu entnehmen. Derartige Sitzanordnungen 2 umfassen einen Sitz 6 sowie einen Sicherheitsbügel 4 und werden bei Fahrgeschäften 1 zur Sicherung des Fahrgastes bei hohen Beschleunigungen verwendet. Ein derartiges Fahrgeschäft 1 ist beispielsweise eine Achterbahn.

Typischerweise sind eine oder mehrere Sitzanordnungen 2 mittels eines Sitzträgers 5 auf einem Fahrzeug (nicht dargestellt) befestigt, wobei das Fahrzeug beim Betrieb eine umlaufende Bahn (nicht dargestellt) des Fahrgeschäfts 1 abfährt. In einer Bahnhof-Station (nicht dargestellt) werden die Sicherheitsbügel 4 geöffnet, damit der oder die Fahrgäste ein- oder aussteigen kann, bzw. können. Um während der Fahrt dem Fahrgast ein bestmögliches Erlebnis und möglichst nicht eingeschränkte Sicht zu bieten, ist der Sitz 6 in Fahrtrichtung vor dem Sitzträger 5 angeordnet. Darüber hinaus ist an dem Sitzträger 5 der Sicherheitsbügel 4 um eine Drehachse 10 schwenkbar derart gelagert, dass der Sicherheitsbügel 4 den Fahrgast umgreift und seinen Körper in dem Sitz sicher hält. Um eine bestmögliche Sicht für den Fahrgast während der Fahrt nach rechts und nach links zu gewährleisten, weist der Sicherheitsbügel 4 eine Bogenform auf.

Zum Öffnen und Schließen des Sicherheitsbügels 4 sind an dem Sitzträger 5 zwei Bügelstelleinheiten 40 angeordnet, die jeweils einerseits an dem Sitzträger 5 mittels einer Zylinderlagerung 43 drehbeweglich abgestützt sind und andererseits jeweils mittels einer Umlenkwippe 41 und einer Verbindungsstange 42 mit dem Sicherheitsbügel 4 gekoppelt sind. Beim Schließen des Sicherheitsbügels 4 ist dieser derart in eine Schließstellung verschwenkt, dass der Fahrgast in Abhängigkeit von seiner Anatomie, also Körpergröße und Körperform, stets sicher auf dem Sitz 6 gehalten ist. Demnach nimmt der Sicherheitsbügel 4 eine andere Schließstellung bei kleinen Kindern an als bei kräftigen und/oder ausgewachsenen Personen.

Die Bügelstelleinheit 40 ist vorzugsweise ein hydraulischer oder pneumatischer Druckzylinder. Alternativ kann die Bügelstelleinheit 40 auch ein mechanisches Stell- und/oder Verriegelungssystem umfassen.

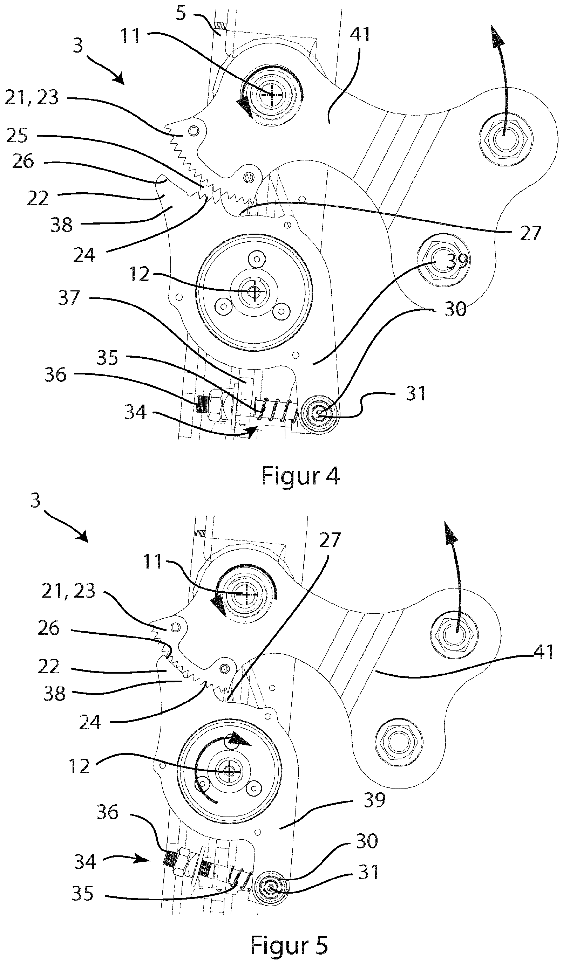

Die jeweilige Umlenkwippe 41 ist hebelförmig ausgestaltet und verbindet die jeweilige Bügelstelleinheit 40 mit der Verbindungsstange 42 und wandelt eine Zustellbewegung der Bügelstelleinheit 40 in eine Drehung der Umlenkwippe 41 um die erste Drehachse 11 um. Hierzu sinddie Bügelstelleinheit 40 und die Verbindungsstange 42 beabstandet zu der ersten Drehachse 11 an der Umlenkwippe 41 angelenkt, wodurch die lineare Zustellbewegung der Bügelstelleinheit 40 oder eine Schwenkbewegung des Sicherheitsbügels 4 in eine Drehung der Umlenkwippe 41 um die erste Drehachse 11 gewandelt ist. Die resultierenden Drehbewegungen beim Öffnen des Sicherheitsbügels 4 sind mittels Pfeillinien in Figur 4 angedeutet. Jeweils eine Umlenkwippe 41 ist mittels einer Welle-Nabe-Verbindung an einem ersten Ende 51 und an einem zweiten Ende 52 fest an einer ersten Drehachse 11 angeordnet.

Die erste Drehachse 11 ist Bestandteil der Bügel-Sekundär-Sicherung 3, die darüber hinaus eine zweite Drehachse 12, ein Gestänge 13, eine Stelleinrichtung 20, ein erstes Sperrelement 21 und ein zweites Sperrelement 22 umfasst. Das erste Sperrelement 21 weist eine zu der ersten Drehachse 11 koaxial ausgerichtete Keilfläche auf und das zweite Sperrelement 22 eine zu der zweiten Drehachse 12 exzentrisch verlaufende Keilfläche.

Die Bügel-Sekundär-Sicherung 3 ist ein sekundäres Sicherheitssystem, welches die Fahrgast-Sicherheit erhöht, und den Sicherheitsbügel 4 immer dann sperrt, wenn das primäre Verriegelungssystem bzw. die Bügelstelleinheit ausfällt.

Alternativ zu dem in Figur 1 dargestellten Ausführungsbeispiel, kann die erste Drehachse 11 der Bügel-Sekundär-Sicherung 3 auch die Drehachse 10 des Sicherheitsbügels 4 sein.

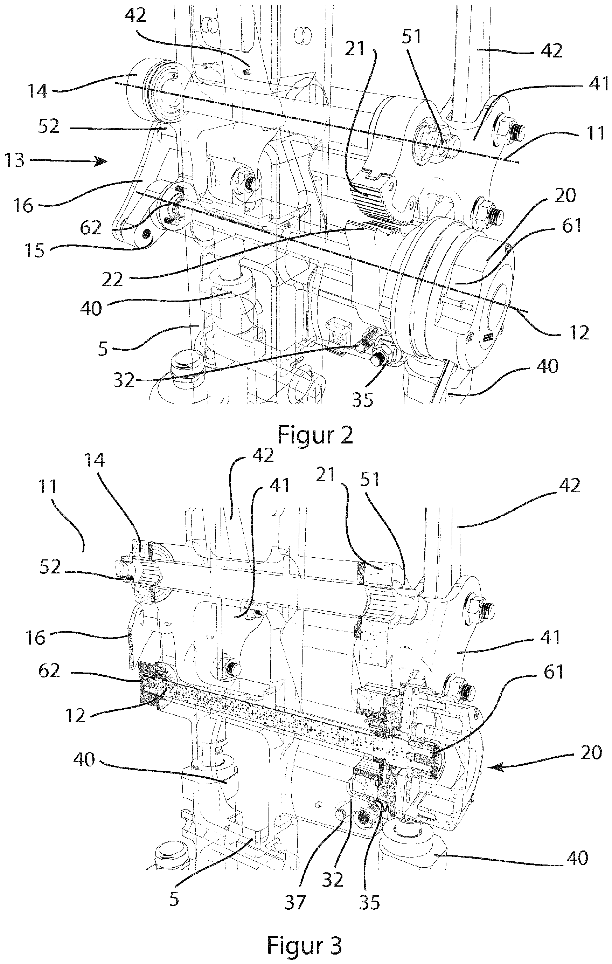

Den Figuren 2 und 3 ist zu entnehmen, dass die erste Drehachse 11 und die zweite Drehachse 12 parallel und beabstandet an dem Sitzträger 5 drehbeweglich gelagert angeordnet sind und mittels des Gestänges 13 kinematisch verbunden sind. Das Gestänge 13 überträgt ein Drehmoment von der ersten Drehachse 11 auf die zweite Drehachse 12 und vice versa.

Das Gestänge 13 besteht aus einem ersten Hebel 14, einem zweiten Hebel 15 und einer Verbindungsstange 16, die den ersten Hebel 14 und den zweiten Hebel 15 verbindet. Der erste Hebel 14 ist an dem zweiten Ende 52 der ersten Drehachse 11 und der zweite Hebel 15 an einem zweiten Ende 62 der zweiten Drehachse 12 angeordnet. Der erste Hebel 14 und der zweite Hebel 15 sind dabei derart an der jeweiligen Drehachse 11, 12 angeordnet, dass die erste Drehachse 11 und die zweite Drehachse 12 gegenläufig sind. Der erste Hebel 14 und der zweite Hebel 15 sind näherungsweise spiegelverkehrt ausgerichtet und bilden zusammen mit der Verbindungstange 16 eine Z-förmige Anordnung. Alternativ zu dem Gestänge 13 kann beispielsweise ein einstufiges Zahnradgetriebe verwendet werden.

Der erste Hebel 14 an dem zweiten Ende 52 der ersten Drehachse 11 kann an der dort befestigten Umlenkwippe 41 angearbeitet oder angeformt sein.

Weiterhin ist an der ersten Drehachse 11 an dem ersten Ende 51 das erste Sperrelement 21 und an einer zweiten Drehachse 12 an einem ersten Ende 61 das zweite Sperrelement 22 angeordnet. In dem dargestellten Ausführungsbeispiel ist das erste Sperrelement 22 an die Umlenkwippe 41 angeformt oder angearbeitet und die Umlenkwippe 41 mit der ersten Drehachse 11 verbunden. Das erste Sperrelement 21 und die erste Drehachse 11 drehen sich bei jedem Öffnen und Schließen des Sicherheitsbügels 4 mit der Umlenkwippe 41 um die erste Drehachse 11.

Zwischen der zweiten Drehachse 12 und dem zweiten Sperrelement 22 ist an dem ersten Ende 61 die Stelleinrichtung 20 vorgesehen, durch die das zweite Sperrelement 22 mit der zweiten Drehachse 12 gekoppelt oder entkoppelt und somit die Bügel-Sekundär-Sicherung 3 aktiviert oder deaktiviert werden kann. Die Stelleinrichtung 20 ist eine elektromagnetische Federdruckbremse, die bei einer Bestromung eine reibschlüssige Verbindung zwischen der zweiten Drehachse 12 und dem zweiten Sperrelement 22 aufhebt und somit den Kraftfluss zwischen dem ersten Sperrelement 21 und dem zweiten Sperrelement 22 unterbricht.

Das erste Sperrelement 21 und das zweite Sperrelement 22 weisen jeweils eine Verzahnung 23, 24 auf, die eingerichtet ist, formschlüssig ineinander zu greifen. Die Verzahnung 23 der ersten Drehachse 11 ist ein Segment eines Stirnrades mit einer Außenverzahnung, die auf der dem zweiten Sperrelement 22 zugewandten Seite des ersten Sperrelementes 21 angeordnet ist.

Insbesondere den Figuren 4 und 5 ist zu entnehmen, dass das zweite Sperrelement 22 bereichsweise exzentrisch ausgebildet ist und einen ersten Flügel 38 und einen zweiten Flügel 39 aufweist, die exzentrisch von der zweiten Drehachse 12 abstehen. Der erste Flügel 38 weist auf der dem ersten Sperrelement 21 zugewandten Seite einen Anschlag 26, die Verzahnung 24 und eine Aussparung 27 auf. Die Verzahnung 24 ist an dem ersten Flügel 38 zwischen dem Anschlag 26 und der Aussparung 27 angeordnet, wobei der Anschlag 26 an dem ersten Flügel 38 am weitesten radial beabstandet zu der zweiten Drehachse 12 angeordnet ist. Der Anschlag 26 und die Verzahnung 24 bilden eine zu der zweiten Drehachse 12 exzentrisch ausgerichtete Keilfläche.

Das zweite Sperrelement 22 hat eine Grundstellung, dargestellt in Figur 4 und eine Sperrstellung, dargestellt in Figur 5. Die Drehung des zweiten Sperrelements 22 in die Sperrstellung erfolgt durch eine Drehung im Uhrzeigersinn, dargestellt mittels einer Pfeillinie in Figur 5.

Der Anschlag 26 und die Verzahnung 24 des ersten Flügels 38 sind an die Form des ersten Sperrelements 21 derart angepasst, dass in der Sperrstellung die Verzahnung 23 des ersten Sperrelements 21 in die Verzahnung 24 des zweiten Sperrelements 22 greift und der Anschlag 26 auf den Zahnflanken der Verzahnung 23 aufliegt, vgl. Figur 5. Dadurch sind die beiden Sperrelement 21, 22 miteinander verkeilt und eine weitere Drehung der beiden Sperrelemente 21, 22 ist nicht möglich.

Die Grundstellung der Bügel-Sekundär-Sicherung 3 bzw. des zweiten Sperrelementes 22 ist Figur 4 zu entnehmen. In der dargestellten Grundstellung befindet sich das Fahrzeug in der Bahnhof-Station und eine elektrische Verbindung ist zwischen der Bahnhof-Station und dem Fahrzeug hergestellt, wodurch die Stelleinrichtung 20 bestromt ist und die reibschlüssige Verbindung zwischen der zweiten Drehachse 12 und dem zweiten Sperrelement 22 aufgehoben ist. Die Bügel-Sekundär-Sicherung 3 ist somit deaktiviert und beim Öffnen des Sicherheitsbügels 4 verbleibt das zweite Sperrelement 22 in der Grundstellung.

Weiterhin ist aus Figur 4 ersichtlich, dass das erste Sperrelement 21 und das zweite Sperrelement 22 in einem Abstand 25 zueinander beabstandet angeordnet sind. Der Abstand 25 zwischen dem ersten Sperrelement 21 und dem zweiten Sperrelement 22 ermöglicht zusammen mit der Aussparung 27 in dem zweiten Sperrelement 22 eine freie Drehung des ersten Sperrelementes 21, ohne dass dieses mit dem zweiten Sperrelement 22 verkeilt. Der Sicherheitsbügel 4 kann in der Grundstellung ordnungsgemäß durch die Bügelstelleinheit 40 oder manuell durch den Fahrgast oder ein Bedienpersonal zum Ein- und Aussteigen geöffnet werden.

Den Figuren 4 und 5 ist zu entnehmen, dass an dem zweiten Sperrelement 22 ein Rücksteller 34 vorgesehen ist. Der Rücksteller 34 umfasst einen Gewindebolzen 36 und eine Feder 35. Der Gewindebolzen 36 ist einerseits drehbar mit dem zweiten Flügel 39 des zweiten Sperrelementes 22 befestigt und andererseits an einer Abstützung 37 am Sitzträger 5 in einer Ausnehmung geführt gehalten. Die Federkraft des Rückstellers 34 wird durch eine Stauchung der Feder 35 zwischen dem zweiten Sperrelement 22 und der Abstützung 37 erreicht, wodurch dieses in der Grundstellung gehalten ist.

Auf der von dem zweiten Sperrelement 22 abgewandten Seite der Abstützung 37 ist eine Doppelmutter auf den Gewindebolzen 36 aufgeschraubt. Die Doppelmutter auf dem Gewindebolzen 36 bildet einen Endanschlag, durch den das Spaltmaß, der Abstand 25 bzw. die Position des zweiten Sperrelements 22 in der Grundstellung festgelegt ist. Die Größe des Abstandes 25 bzw. des Spaltmaßes zwischen dem ersten Sperrelement 21 und dem zweiten Sperrelement 22 in der Grundstellung definiert den zulässigen Sicherheitsbügel-Öffnungswinkel, bevor die Bügel-Sekundär-Sicherung 3 den Sicherheitsbügel 4 sperrt. Der zulässige Sicherheitsbügel-Öffnungsweg ist je nach Fahrgeschäft und Risikobeurteilung festzulegen.

Der Rücksteller 34 ermöglicht darüber hinaus, dass der Sicherheitsbügel 4 auch während der Fahrt und/oder im stromlosen Zustand des Fahrzeuges geschlossen werden kann. In diesem Zustand befindet sich das zweite Sperrelement 22 in der Grundstellung. Durch ein Überschreiten des Reibmoments der Stelleinrichtung 20 ist jedoch eine Rotation der zweiten Drehachse 12 gegen das Sperrelement 22 möglich.

Die Federkraft der Feder 35 des Rückstellers 34 ist derart zu dimensionieren, dass das auf das zweite Sperrelement 22 durch die Federkraft ausgeübte Drehmoment nicht das Reibmoment der Stelleinrichtung 20, die als Kupplung ausgebildet ist, übersteigt.

Die Sperrstellung, welche in Figur 5 dargestellt ist, kann auch manuell aufgehoben werden, indem ein Rastbolzen 31 einer Nothandfunktion 30 betätigt ist. Bei Betätigung des Rastbolzens 31 greift dieser in eine an dem Sitzträger 5 abgestützte Kulisse 32, wodurch eine Drehung des zweiten Sperrelements 22 in die Sperrstellung verhindert ist. Diese Funktion ist beispielsweise bei einer Evakuierung des Fahrzeuges notwendig, wenn kein Strom für die Betätigung der Stelleinrichtung 20 zur Verfügung steht.

Vor Beginn der Fahrt nimmt der Fahrgast auf dem Sitz 6 Platz und der Sicherheitsbügel 4 wird durch die Bügelstelleinheit 40 geschlossen. In Abhängigkeit von der Anatomie, also Körperform und Körpergröße, des Fahrgasts ist der Schließwinkel des Sicherheitsbügels 4 unterschiedlich. Nach Startfreigabe oder beim Verlassen der Bahnhof-Station wird die Bügel-Sekundär-Sicherung 3 aktiviert. Bei der Aktivierung der Stelleinrichtung 20 wird der an den Fahrgast angepasste Schließwinkel als Schließstellung des Sicherheitsbügels 4 vorgegeben, indem die Stelleinrichtung 20 das in der Grundstellung befindliche zweite Sperrelement 22 mit der zweiten Welle 12 gekoppelt. Die Schließstellung entspricht somit dem Schließwinkel des Sicherheitsbügels 4, der durch die Bügel-Sekundär-Sicherung 3 bei einem Versagen der Primärsicherung abgesichert ist.

Während der Fahrt des Fahrzeugs wird der Sicherheitsbügel 4 durch die zwei Bügelstelleinheiten 40 in dem Schließwinkel bzw. der Schließstellung gehalten. Die Bügelstelleinheiten 40 bilden somit die Primärsicherung. Bei einem Ausfall der Bügelstelleinheiten 40 ist die Verriegelungsfunktion des Sicherheitsbügels 4 außer Kraft gesetzt und der Sicherheitsbügel 4 verlässt die Schließstellung und öffnet sich. Bei dieser Öffnungsbewegung wird die Schwenkbewegung des Sicherheitsbügels 4 durch die Verbindungsstange 42 auf die Umlenkwippe 41 übertragen. Die erste Drehachse 11 und die zweite Drehachse 12 werden gegenläufig verdreht. Die Sperrelemente 21, 22 sind anschließend innerhalb des vorgegebenen tolerierten Abstandes 25 relativ frei beweglich zueinander.

Sobald sich die Zahnflanken der Verzahnung 23 des ersten Sperrelements 21 und die Zahnflanken der Verzahnung 24 des zweiten Sperrelements 22 berühren, drehen sich beide Verzahnungen 23, 24 gegenseitig ein und verkeilen. Die Bügel-Sekundär-Sicherung 3 bzw. das zweite Sperrelement 22 ist somit in die Sperrstellung überführt. Bei dem Sperrvorgang drehen die Umlenkwippe 41 bzw. das erste Sperrelement 21 und das zweite Sperrelement 22 entsprechend der in Figur 5 eingezeichneten Pfeillinien aus der Grundstellung in die Sperrstellung.

Bei dieser Öffnungsbewegung wird die Schwenkbewegung des Sicherheitsbügels 4 mittels der Verbindungsstange 42 auf die Umlenkwippe 41 übertragen. Die erste Drehachse 11 und die zweite Drehachse 12 werden gegenläufig verdreht und das erste Sperrelement 21 und das zweite Sperrelement 22 sind in die Sperrstellung überführt und verkeilen miteinander, wie in Figur 5 dargestellt. Durch das Verkeilen des ersten Sperrelements 21 und des zweiten Sperrelements 22 ist eine weitere Drehung der Umlenkwippe 41 unterbunden, wodurch die Öffnungsbewegung des Sicherheitsbügels 4 gesperrt ist und ein Öffnen des Sicherheitsbügels 4 nicht mehr möglich ist, selbst wenn die Stelleinrichtung 20 geöffnet wird.

Das Bedienpersonal bekommt somit den Hinweis, dass die Bügelstelleinheiten 40 bzw. die Primärsicherung ausgefallen sind bzw. ist. Das Fahrzeug ist sodann außer Betrieb zu nehmen und instand zu setzen.

Um den Sicherheitsbügel 4 bei ausgefallenen Bügelstelleinheiten 40 zu öffnen, muss dieser lediglich ein Stück in die Schließrichtung verschwenkt werden. Dadurch ist die Bügel-Sekundär-Sicherung 3 entriegelt und durch ein Öffnen der Stelleinrichtung 20 ist ein erneutes Sperren des Sicherheitsbügels 4 verhindert.

Alternativ zu dem dargestellten Ausführungsbeispiel kann die erste Drehachse 11 gleichzeitig die Drehachse 10 des Sicherheitsbügels 4 sein. Die Drehachse 10 des Sicherheitsbügels 4 ist somit die erste Drehachse 11, an der das erste Sperrelement 21 drehfest angeordnet ist.

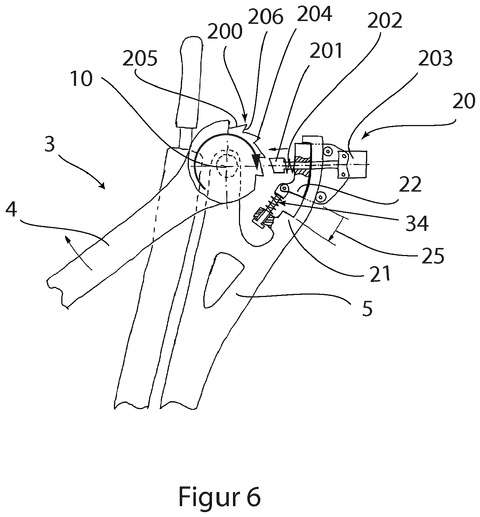

Figur 6 ist ein zweites erfindungsgemäßes Ausführungsbeispiel zu entnehmen.

Die Bügel-Sekundär-Sicherung 3 ist im Bereich der Drehachse 10 des Sicherheitsbügels 4 angeordnet.

Das erste Sperrelement 21 ist mittels einer Schlittenführung an dem Sitzträger 5 beweglich angeordnet und durch die Stelleinrichtung 20 mit dem Sicherheitsbügel 4 koppelbar, wie nachfolgend näher erläutert ist, wodurch eine Schwenkbewegung des Sicherheitsbügels 4 in eine Verschiebung des Sperrelements 21 wandelbar ist. Das Sperrelement 21 ist mittels des Rückstellers 34 federnd in der Grundstellung gehalten.

Die Stelleinrichtung 20 ist eine formschlüssige koppelbare Kupplung und umfasst ein Rastprofil 200, einen Rastzapfen 201, eine Vorspannfeder 202 und einen Hubmagneten 203.

Das Rastprofil 200 ist drehfest mit dem Sicherheitsbügel 4 verbunden und weist eine Vielzahl von Rastnasen 204 auf, die aus Laufflächen 205 und Rastkanten 206 gebildet sind. Die Rastkanten 206 stehen im Wesentlichen radial von der Drehachse 10 ab und die Laufflächen 205 sind spiralförmig zu der Drehachse 10 angeordnet. Die Form des Rastzapfens 201 korrespondiert mit der Form mindestens einer Rastnase 204.

Die Stelleinrichtung 20 ist ausfallsicher ausgestaltet, d. h., dass bei einer Störung der Stelleinrichtung 20 diese stets aktiviert ist. Folglich ist die Bügel-Sekundär-Sicherung 3 auch aktiviert.

Bei einer Bestromung der Stelleinrichtung 20 ist die Wirkverbindung zwischen dem Rastprofil 200 und dem Rastzapfen 201 gelöst. Der Rastzapfen 201 wird unter Stauchung der Vorspannfeder 202 durch den Hubmagneten 203 von dem Rastprofil 200 entfernt. In diesem Zustand ist der Sicherheitsbügel 4 frei verschwenkbar und die Bügel-Sekundär-Sicherung 3 deaktiviert.

Nach dem Einsteigen eines Fahrgastes wird der Sicherheitsbügel 4 durch die Bügelstelleinheit 40 geschlossen. Bei Startfreigabe bzw. bei dem Verlassen der Bahnhof-Station wird die Bügel-Sekundär-Sicherung 3 durch eine Trennung der Spannungsversorgung der Stelleinrichtung 20 spannungsfrei und somit die Bügel-Sekundär-Sicherung 3 aktiviert. Durch die Vorspannkraft der Vorspannfeder 202 greift der Rastzapfen 201 in das Rastprofil 200 ein, wodurch die fahrgastanatomiebezogene Schließstellung des Sicherheitsbügels 4 vorgegeben ist.

Während der Fahrt des Fahrzeugs wird der Sicherheitsbügel 4 durch die zwei Bügelstelleinheiten 40 in der Schließstellung gehalten. Bei einem Ausfall der Bügelstelleinheiten 40, die gleichzeitig die Primärsicherung sind, verlässt der Sicherheitsbügel 4 die Schließstellung und öffnet sich. Bei dieser Öffnungsbewegung aus der Schließstellung heraus wird die Schwenkbewegung des Sicherheitsbügels 4 mittels der Stelleinrichtung 20 auf das erste Sperrelement 21 übertragen, wodurch sich dieses entlang des tolerierten Weges, der dem Abstand 25 entspricht, in Richtung des zweiten Sperrelementes 22 bewegt. Nach Überschreiten des tolerierten Verstellungsweges ist eine weitere Drehung durch den Sperrkontakt zwischen dem ersten Sperrelement 21 und dem zweiten Sperrelement 22 verhindert, wodurch der Sicherheitsbügel 4 fest gestellt ist.

Durch eine entsprechende Dimensionierung des Abstandes 25 kann der zulässig tolerierte Öffnungswinkel des Sicherheitsbügels 4 federnd ausgeglichen werden, ohne dass die Bügel-Sekundär-Sicherung 3 bzw. das zweite Sperrelement 22 eine Last erfährt. Erst beim Verlassen des vorgesehenen Toleranzbereichs übernimmt die Bügel-Sekundär-Sicherung 3 die Last des Primärsystems, der Bügelstelleinheit 40. Die Bügel-Sekundär-Sicherung 3 ist somit bei ordnungsgemäßer Funktion der Bügelstelleinheiten 40 lastfrei und somit verschleißfrei.

Somit kann erfindungsgemäß eine Bügel-Sekundär-Sicherung 3, eine Sitzanordnung 2 mit einer erfindungsgemäßen Bügel-Sekundär-Sicherung 3 sowie ein Fahrgeschäft 1 bereitgestellt werden, das eine zuverlässige Sicherung für einen Sicherheitsbügel 4 zur Verfügung stellt, die erst dann den Sicherheitsbügel 4 sperrt, wenn das primäre Verriegelungssystem bzw. die Bügelstelleinheiten 40 ausfallen. Die Bauteile der erfindungsgemäßen Bügel-Sekundär-Sicherung 3 weisen ein schlanke leichtbaugerechte Form auf, die mit einem sehr geringen Kraftaufwand beim Versagen des primären Verriegelungssystems bzw. der Bügelstelleinheit 40 den Sicherheitsbügel 4 blockieren.

### Bezugszeichenliste

- 1: Fahrgastgeschäft
- 2: Sitzanordnung
- 3: Bügel-Sekundär-Sicherung
- 4: Sicherheitsbügel
- 5: Sitzträger
- 6: Sitz
- 10: Drehachse
- 11: erste Drehachse
- 12: zweite Drehachse
- 13: Gestänge
- 14: erster Hebel
- 15: zweiter Hebel
- 16: Verbindungsstange
- 20: Stelleinrichtung
- 21: erstes Sperrelement
- 22: zweites Sperrelement
- 23: Verzahnung von 21
- 24: Verzahnung von 22
- 25: Abstand
- 26: Anschlag
- 27: Aussparung
- 30: Nothandfunktion
- 31: Bolzen
- 32: Kulisse
- 34: Rücksteller
- 35: Feder
- 36: Gewindebolzen
- 37: Abstützung
- 38: erster Flügel von 22
- 39: zweiter Flügel von 22
- 40: Bügelstelleinheit
- 41: Umlenkwippe
- 42: Verbindungsstange
- 43: Zylinderlagerung
- 51: erstes Ende von 11
- 52: zweites Ende von 11
- 61: erstes Ende von 12
- 62: zweites Ende von 12
- 200: Rastprofil
- 201: Rastzapfen
- 202: Vorspannfeder
- 203: Hubmagnet
- 204: Rastnase
- 205: Lauffläche
- 206: Rastkanten

## Patentansprüche

1. Bügel-Sekundär-Sicherung (3) eines Sicherheitsbügels (4) eines Fahrgeschäfts umfassend:
- eine Primärsicherung, die den Sicherheitsbügel (4) während einer Fahrt des Fahrgeschäfts in einer an die Anatomie des Fahrgastes angepassten Winkelstellung hält,
- mindestens ein erstes Sperrelement (21) und mindestens ein zweites Sperrelement (22),
- wobei das mindestens eine erste Sperrelement (21) und das mindestens eine zweite Sperrelement (22) in einem Abstand (25) zueinander angeordnet sind,
- wobei beim Versagen der Primärsicherung der Sicherheitsbügel (4) in einem tolerierten Öffnungswinkel bewegbar ist,
- wobei der tolerierte Öffnungswinkel mit dem Abstand (25) zwischen dem mindestens einen ersten und dem mindestens einen zweiten Sperrelement (21, 22) korreliert,
- und wobei beim Überschreiten des tolerierten Öffnungswinkels das mindestens eine erste Sperrelement (21) und das mindestens eine zweite Sperrelement (22) den Sicherheitsbügel (4) blockieren.

2. Bügel-Sekundär-Sicherung (3) nach Anspruch 1, umfassend:
- wenigstens eine erste Drehachse (10, 11), die mit einer Schwenkbewegung des Sicherheitsbügels (4) gekoppelt ist,
- wenigstens eine zweite Drehachse (12), die drehbeweglich mit der wenigstens einen ersten Drehachse (11) gekoppelt ist,
- wobei an der wenigstens einen ersten Drehachse (10, 11) das mindestens eine erste Sperrelement (21) vorgesehen ist,
- wobei an der wenigsten einen zweiten Drehachse (12) das mindestens eine zweite Sperrelement (22) vorgesehen ist,
- wobei im Kraftfluss zwischen dem mindestens einen ersten Sperrelement (21) und dem mindestens einen zweiten Sperrelement (22) das wenigstens eine Stellglied (20) vorgesehen ist, und
- wobei im aktivierten Zustand des wenigstens einen Stellgliedes (20) das mindestens eine erste Sperrelement (21) und das mindestens eine zweite Sperrelement (22) bei einer Drehung der Drehachsen (10, 11, 12) verkeilen.

3. Bügel-Sekundär-Sicherung (3) nach Anspruch 2, **dadurch gekennzeichnet, dass** das wenigstens eine Stellglied (20) zwischen einer der Drehachsen (10, 11, 12) und einem der Sperrelemente (21, 22) angeordnet ist.

4. Bügel-Sekundär-Sicherung (3) nach einem der Ansprüche 2 oder 3, **dadurch gekennzeichnet, dass** das wenigstens eine Stellglied (20) einer Kupplung, eine elektromagnetische Federdruckbremse, ein elektromagnetischer Aktor, eine Permanentmagnetbremse oder dergleichen ist.

5. Bügel-Sekundär-Sicherung (3) nach einem der Ansprüche 2 bis 4, **dadurch gekennzeichnet, dass** die wenigstens eine erste Drehachse (10, 11) mit der wenigstens einen zweiten Drehachse (12) mittels mindestens eines Gestänges (13) gekoppelt ist.

6. Bügel-Sekundär-Sicherung (3) nach einem der Ansprüche 2 bis 4, **dadurch gekennzeichnet, dass** die wenigstens eine erste Drehachse (10, 11) mit der wenigstens einen zweiten Drehachse (12) mittels mindestens eines Zahngetriebes gekoppelt ist.

7. Bügel-Sekundär-Sicherung (3) nach einem der Ansprüche 2 bis 6, **dadurch gekennzeichnet, dass** mindestens eines der Sperrelemente (21, 22) bereichsweise exzentrisch zu der jeweiligen Drehachse (10, 11, 12) ausgebildet ist.

8. Bügel-Sekundär-Sicherung (3) nach einem der Ansprüche 2 bis 7, **dadurch gekennzeichnet, dass** die wenigstens eine erste Drehachse (10, 11) parallel und beabstandet zu der wenigstens einen zweiten Drehachse (12) angeordnet ist.

9. Bügel-Sekundär-Sicherung (3) nach einem der Ansprüche 2 bis 8, **dadurch gekennzeichnet, dass** die wenigstens eine erste Drehachse (10, 11) und die wenigstens eine zweite Drehachse (12) gegenläufig gekoppelt sind.

10. Bügel-Sekundär-Sicherung (3) nach einem der Ansprüche 2 bis 9, **dadurch gekennzeichnet, dass** wenigstens eines der Sperrelemente (21, 22) mindestens einen exzentrischen Anschlag (26) aufweist.

11. Bügel-Sekundär-Sicherung (3) nach einem der Ansprüche 2 bis 10, **dadurch gekennzeichnet, dass** die Sperrelemente (21, 22) wenigstens eine zueinander korrespondierende Verzahnung (23, 24) aufweisen.

12. Bügel-Sekundär-Sicherung (3) nach einem der vorgenannten Ansprüche, **dadurch gekennzeichnet, dass** wenigstens ein Rücksteller (34) vorgesehen ist, durch den wenigstens eines der Sperrelemente (21, 22) durch eine Federkraft in einer Grundstellung gehalten ist.

13. Bügel-Sekundär-Sicherung (3) nach Anspruch 12, **dadurch gekennzeichnet, dass** in der Grundstellung der Sperrelemente (21, 22) zwischen den Sperrelementen (21, 22) ein Abstand (25) vorgesehen ist.

14. Bügel-Sekundär-Sicherung (3) nach einem der vorgenannten Ansprüche, **dadurch gekennzeichnet, dass** eine Nothandfunktion (30) vorgesehen ist, durch die ein Verkeilen der Sperrelemente (21, 22) bei aktivierten Stellglied (20) verhindert ist.

15. Sitzanordnung (2) eines Fahrgeschäftes (1) umfassend:
- mindestens einen Sitz (6) für mindestens einen Fahrgast,
- mindestens einen um eine Drehachse (10) verschwenkbaren Sicherheitsbügel (4) für den mindestens einen Fahrgast,
- mindestens eine Bügel-Sekundär-Sicherung (3) für den mindestens einen Sicherheitsbügel (4) nach einem der vorgenannten Ansprüche, und
- mindestens eine Stelleinheit (40),
- wobei die mindestens eine Stelleinheit (40) den mindestens einen Sicherheitsbügel (4) verschwenkt.

16. Sitzanordnung (2) nach Anspruch 15, **dadurch gekennzeichnet, dass** die mindestens eine Bügelstelleinheit (40) ein Druckzylinder oder ein mechanischer Verriegelungszylinder ist.

17. Sitzanordnung (2) nach einem der Ansprüche 15 oder 16, **dadurch gekennzeichnet, dass** zur Übertragung der Zustellbewegung zwischen der mindestens einen Bügelstelleinheit (40) und dem mindestens einen Sicherheitsbügel (4) eine Umlenkwippe (41) vorgesehen ist, die mit der wenigstens einen ersten Drehachse (11) gekoppelt ist und bei Betätigung der mindestens einen Bügelstelleinheit (40) eine Drehbewegung auf die mindestens eine erste Drehachse (11) übertragen ist.

18. Sitzanordnung (2) nach einem der Ansprüche 15 oder 16, **dadurch gekennzeichnet, dass** die Drehachse (10) die erste Drehachse (11) der Bügel-Sekundär-Sicherung (3) ist.

19. Fahrgeschäft (1) mit einer Bahn und wenigstens einem auf der Bahn beweglichen Fahrzeug mit mindestens einer Sitzanordnung (2) nach einem der Ansprüche 15 bis 18.

20. Fahrgeschäft (1) nach Anspruch 19, **dadurch gekennzeichnet, dass** eine Bahnhof-Station vorgesehen ist, in der eine elektrische Verbindung zwischen der Bahnhof-Station und dem Fahrzeug hergestellt ist, durch welche die Stelleinrichtung (20) der Sitzanordnung (2) zur Betätigung bestromt ist.

## Claims

1. Secondary harness securing device (3) of a safety harness (4) of an amusement ride comprising:
- a primary securing device which, during a ride of the amusement ride, holds the safety harness (4) in an angle position that is adapted to the anatomy of the passenger,
- at least one first locking element (21) and at least one second locking element (22),
- wherein the at least one first locking element (21) and the at least one second locking element (22) are arranged at a distance (25) to each other,
- wherein, if the primary securing device fails, the safety harness (4) can be moved within a tolerated opening angle,
- wherein the tolerated opening angle correlates with the distance (25) between the at least one first and the at least one second locking element (21, 22),
- and wherein, if the tolerated opening angle is exceeded, the at least one first locking element (21) and the at least one second locking element (22) block the safety harness (4).

2. Secondary harness securing device (3) in accordance with claim 1, comprising:
- at least one first rotation axis (10, 11) that is coupled to a swivel movement of the safety harness (4),
- at least one second rotation axis (12) which is rotationally coupled to the at least one first rotation axis,
- wherein the at least one second locking element (22) is provided on the at least one second rotation axis (12),
- wherein the at least one final control device (20) is provided in the force flow between the at least one first locking element (21) and the at least one second locking element (22), and
- wherein, when the at least one final control device (20) is in an activated state, the at least one first locking element (21) and the at least one second locking element (22) become jammed upon a rotation of the rotation axes (10, 11, 12).

3. Secondary harness securing device (3) in accordance with claim 2, **characterized in that** the at least one final control device (20) is arranged between one of the rotation axes (10, 11, 12) and one of the locking elements (21, 22).

4. Secondary harness securing device (3) in accordance with either of claims 2 or 3, **characterized in that** the at least one final control device (20) is a clutch, an electromagnetic spring pressure brake, an electromagnetic actuator, a permanent magnet brake or similar.

5. Secondary harness securing device (3) in accordance with any of claims 2 to 4, **characterized in that** the at least one first rotation axis (10, 11) and the at least one second rotation axis (12) are coupled by means of at least one linkage (13).

6. Secondary harness securing device (3) in accordance with any of claims 2 to 4, **characterized in that** the at least one first rotation axis (10, 11) and the at least one second rotation axis (12) are coupled by means of at least one toothed gearing.

7. Secondary harness securing device (3) in accordance with any of claims 2 to 6, **characterized in that** at least one of the locking elements (21, 22) is implemented regionally eccentrically to the corresponding rotation axis (10, 11, 12).

8. Secondary harness securing device (3) in accordance with any of claims 2 to 7, **characterized in that** the at least one first rotation axis (10, 11) is arranged parallel and at a distance to the at least one second rotation axis (12).

9. Secondary harness securing device (3) in accordance with any of claims 2 to 8, **characterized in that** the at least one first rotation axis (10, 11) and the at least one second rotation axis (12) are coupled in a counter-rotating manner.

10. Secondary harness securing device (3) in accordance with any of claims 2 to 9, **characterized in that** at least one of the locking elements (21, 22) comprises at least one eccentric abutment (26).

11. Secondary harness securing device (3) in accordance with any of claims 2 to 10, **characterized in that** the locking elements (21, 22) comprise at least one mutually corresponding gearing (23, 24).

12. Secondary harness securing device (3) in accordance with any of the preceding claims, **characterized in that** at least one resetter (34) is provided, by means of which at least one of the at least one locking elements (21, 22) is held in its initial position with a spring force.

13. Secondary harness securing device (3) in accordance with claim 12,
**characterized in that**, in the initial position of the locking elements (21, 22), a distance is provided between the locking elements (21, 22).

14. Secondary harness securing device (3) in accordance with any of the preceding claims, **characterized in that** an emergency hand function (30) is provided, by means of which a jamming of the locking elements (21, 22) when the final control device (20) is activated is prevented.

15. Seating arrangement (2) of an amusement ride (1) comprising:
- at least one seat (6) for at least one passenger,
- at least one safety harness (4) which can be swiveled around a rotation axis (10) for the at least one passenger,
- at least one secondary harness securing device (3) for the at least one safety harness (4) in accordance with any of the preceding claims, and
- at least one setting unit (40),
- wherein the at least one setting unit (40) swivels the at least one safety harness (4).

16. Seating arrangement (2) in accordance with claim 15,
**characterized in that** the at least one harness setting unit (40) is a pressure cylinder or a mechanical locking cylinder.

17. Seating arrangement (2) in accordance with either of claims 15 or 16,
**characterized in that**, in order to transmit the adjustment movement between the at least one harness setting unit (40) and the at least one safety harness (4), a deflection rocker (41) is provided that is coupled to the at least one first rotation axis (11) and **in that**, when the at least one harness setting unit (40) is activated, a rotational movement is transmitted onto the at least one rotation axis (11).

18. Seating arrangement (2) in accordance with either of claims 15 or 16,
**characterized in that** the rotation axis (10) is the first rotation axis (11) of the secondary harness securing device (3).

19. Amusement ride (1) with a track and with at least one vehicle which can move along the track and which has at least one seating arrangement (2) in accordance with any of claims 15 to 18.

20. Amusement ride (1) in accordance with claim 19,
**characterized in that** a railway station is provided in which an electrical connection between the railway station and the vehicle is provided, by means of which the final control device (20) of the seating arrangement (2) is provided with electricity for activation.

## Revendications

1. Fixation secondaire (3) d'un arceau de sécurité (4) d'une installation de véhicules comprenant :
- une sécurité primaire qui tient l'arceau de sécurité (4) pendant le mouvement du véhicule dans une position angulaire adaptée à l'anatomie du passager,
- au moins un premier élément de blocage (21) et au moins un second élément de blocage (22),
* ce premier élément de blocage (21) et ce second élément de blocage (22) laissant entre eux un écart (25),
* en cas de défaillance de la sécurité primaire, l'arceau de sécurité (4) peut bouger dans un angle d'ouverture toléré,
* l'angle d'ouverture toléré est en corrélation avec l'écart (25) entre ce premier et ce second élément de blocage (21, 22), et
- en cas de dépassement de l'angle d'ouverture toléré, ce premier élément de blocage (21) et ce second élément de blocage (22) bloquent l'arceau de sécurité (4).

2. Sécurité secondaire d'arceau (3) selon la revendication 1, comprenant :
- au moins un premier axe de rotation (10, 11) couplé au mouvement de pivotement de l'arceau de sécurité (4),
- au moins un second axe de rotation (12) couplé en rotation au premier axe de rotation (11),
- ce premier axe de rotation (10, 11) étant muni au moins d'un premier élément de blocage (21),
- ce second axe de rotation (12) étant muni d'au moins un second élément de blocage (22),
- au moins un organe de réglage (20) dans la transmission de force entre ce premier élément de blocage (21) et ce second élément de blocage (22), et
- à l'état activé de cet organe de réglage (20), le premier élément de blocage (21) et le second élément de blocage (22) se coincent lors d'une rotation des axes de rotation (10, 11, 12).

3. Sécurité secondaire d'arceau (3) selon la revendication 2,
**caractérisée en ce que**
l'élément de réglage (20) est entre l'un des axes de rotation (10, 11, 12) et l'un des éléments de blocage (21, 22).

4. Sécurité secondaire d'arceau (3) selon l'une des revendications 2 ou 3,
**caractérisée en ce que**
cet élément de réglage (20) est un embrayage, un frein à ressort électromagnétique, un actionneur électromagnétique, un frein à aimant permanent ou un moyen analogue.

5. Sécurité secondaire d'arceau (3) selon l'une des revendications 2 à 4,
**caractérisée en ce que**
le premier axe de rotation (10, 11) est couplé au moins à un second axe de rotation (12) à l'aide d'au moins une tringlerie (13).

6. Sécurité secondaire d'arceau (3) selon l'une des revendications 2 à 4,
**caractérisée en ce que**
le premier axe de rotation (10, 11) est couplé à au moins un second axe de rotation (12) par au moins une transmission dentée.

7. Sécurité secondaire d'arceau (3) selon l'une des revendications 2 à 6,
**caractérisée en ce que**
au moins l'un des éléments de blocage (21, 22) est excentré par zone par rapport à l'axe de rotation (10, 11, 12) respectif.

8. Sécurité secondaire d'arceau (3) selon l'une des revendications 2 à 7,
**caractérisée en ce que**
le premier axe de rotation (10, 11) est parallèle et écarté par rapport au second axe de rotation (12).

9. Sécurité secondaire d'arceau (3) selon l'une des revendications 2 à 8,
**caractérisée en ce que**
le premier axe de rotation (10, 11) et le second axe de rotation (12) sont couplés en sens opposé.

10. Sécurité secondaire d'arceau (3) selon l'une des revendications 2 à 9,
**caractérisée en ce que**
au moins l'un des éléments de blocage (21, 22) comporte au moins une butée excentrée (26).

11. Sécurité secondaire d'arceau (3) selon l'une des revendications 2 à 10,
**caractérisée en ce que**
les éléments de blocage (21, 22) ont au moins une denture (23, 24) correspondante.

12. Sécurité secondaire d'arceau (3) selon l'une des revendications précédentes,
**caractérisée en ce que**
il est prévu au moins un ressort de rappel (34) qui maintient au moins l'un des éléments de blocage (21, 22) par sa force de ressort dans une position de base.

13. Sécurité secondaire d'arceau (3) selon la revendication 12,
**caractérisée en ce que**
dans la position de base des éléments de blocage (21, 22), il subsiste un écart (25) entre les éléments de blocage (21, 22).

14. Sécurité secondaire d'arceau (3) selon l'une des revendications précédentes,
**caractérisée en ce que**
il est prévu une fonction manuelle de secours (30) qui interdit le coincement des éléments de blocage (21, 22) lorsque l'organe de réglage (20) est activé.

15. Dispositif de siège (2) d'un véhicule (1) comprenant :
- au moins un siège (6) pour au moins un passager,
- au moins un arceau de sécurité (4) pivotant autour d'un axe de rotation (10) pour au moins un passager,
- au moins une sécurité secondaire (3) pour cet arceau de sécurité (4) selon l'une des revendications précédentes, et
- au moins une unité de réglage (40), cette unité de réglage (40) pivotant au moins l'arceau de sécurité (4).

16. Dispositif de siège (2) selon la revendication 15,
**caractérisé en ce que**
l'unité de réglage d'arceau (40) comprend un cylindre de pression ou un cylindre de verrouillage mécanique.

17. Dispositif de siège (2) selon l'une des revendications 15 ou 16,
**caractérisée en ce que**
pour transmettre le mouvement de réglage entre au moins une unité de réglage d'arceau (40) et au moins un arceau de sécurité (4), il est prévu une bielle (41) couplée au premier axe de rotation (11) et qui, lors de l'actionnement de l'unité de réglage d'arceau (40), transmet le mouvement de rotation au moins au premier axe de rotation (11).

18. Dispositif de siège (2) selon l'une des revendications 15 ou 16,
**caractérisée en ce que**
l'axe de rotation (10) est le premier axe de rotation (11) de la sécurité secondaire d'arceau (3).

19. Installation de véhicules (1) comprenant un trajet et au moins un véhicule mobile sur le trajet avec au moins un dispositif de siège (2) selon l'une des revendications 15 à 18.

20. Installation de véhicules (1) selon la revendication 19,
**caractérisée en ce que**
il est prévu une gare dans laquelle on fait le branchement électrique entre la gare et le véhicule pour alimenter l'installation de réglage (20) du dispositif de siège (2) pour la manœuvrer.
